Europäisches Patentamt

(19) European Patent Office    (11) Publication number: **0 018 715**
Office européen des brevets    **A1**

(12) **EUROPEAN PATENT APPLICATION**

(21) Application number: **80300868.9**    (51) Int. Cl.³: **C 08 L 33/20**
    **C 08 J 5/18**
(22) Date of filing: **20.03.80**

(30) Priority: **30.04.79 US 34813**    (71) Applicant: **MOBIL OIL CORPORATION**
    **150 East 42nd Street**
    **New York New York 10017(US)**

(43) Date of publication of application:    (72) Inventor: **Arbit, Harold Abraham**
    **12.11.80 Bulletin 80/23**    **35 North Sixth Avenue**
    **Highland Park New Jersey(US)**

(84) Designated Contracting States:    (72) Inventor: **Hungerford, Gordon Parry**
    **BE DE FR GB IT NL**    **2210 Creek Road**
    **Palmyra, New York(US)**

    (74) Representative: **Cooper, John Anthony**
    **Mobil Court 3 Clements Inn**
    **London WC2A 2EB(GB)**

(54) Process for preparing heat-stabilized polyacrylonitrile films and polyacrylonitrile films thus produced.

(57) A method for making a heat stabilized polyacrylonitrile biaxially oriented film by the solution casting technique is provided. After the cast film has been washed to remove solvent, it is contacted with a solution of maleic acid, sodium hydrosulfite, sodium bisulfite or a combination of ferric chloride and phosphoric acid.

EP 0 018 715 A1

./...

Croydon Printing Company Ltd.

FIG.1

1

Process for preparing heat stabilized
polyacrylonitrile films

**TITLE MODIFIED**
**see front page**

This invention relates to biaxially oriented polyacrylonitrile
films that are stable to heat degradation and to a process
for preparing them.

As is well known in the art, polyacrylonitrile has a tendency
to discolor when exposed to high temperatures.  Various
proposals have been made to inhibit discoloration generally
to add inhibitors, such as tin salts and maleamic acids, to
a solution used for spinning fibers and the like.

Insofar as is now known, the additives used in this invention
have not been proposed for color stabilization of acrylonitrile.  This invention is particularly applicable for
color stabilization of biaxially oriented polyacrylonitrile
films prepared as described in U.S. Patent No. 4,066,731.

.This invention provides in a method for making a biaxially
oriented film comprising casting a film of a hot concentrated
solution of polyacrylonitrile in dimethyl sulfoxide onto a
cooled surface coated with a film of polytetrafluorethylene
or wetted with an aqueous solution of dimethyl sulfoxide to
provide a film comprising polyacrylonitrile and solvent,
contacting the resulting film with water while maintaining
the film under conditions that substantially prevent it from
curling and puckering to substantially remove the dimethyl
sulfoxide from the film and incorporate about 40-60% by
weight water into said film, and recovering therefrom a film
consisting essentially of polyacrylonitrile and from about
40% to about 60% by weight water, biaxially orienting said
film consisting essentially of polyacrylonitrile and water,
and drying said biaxially oriented film to substantially remove water therefrom; the improvement that comprises, following the step of contacting with water and prior to biaxially orienting, introducing a minor amount of an additive selected from the group consisting of maleic acid, sodium hydrosulfite, sodium bisulfite, and a combination of ferric chloride and phosphoric acid.

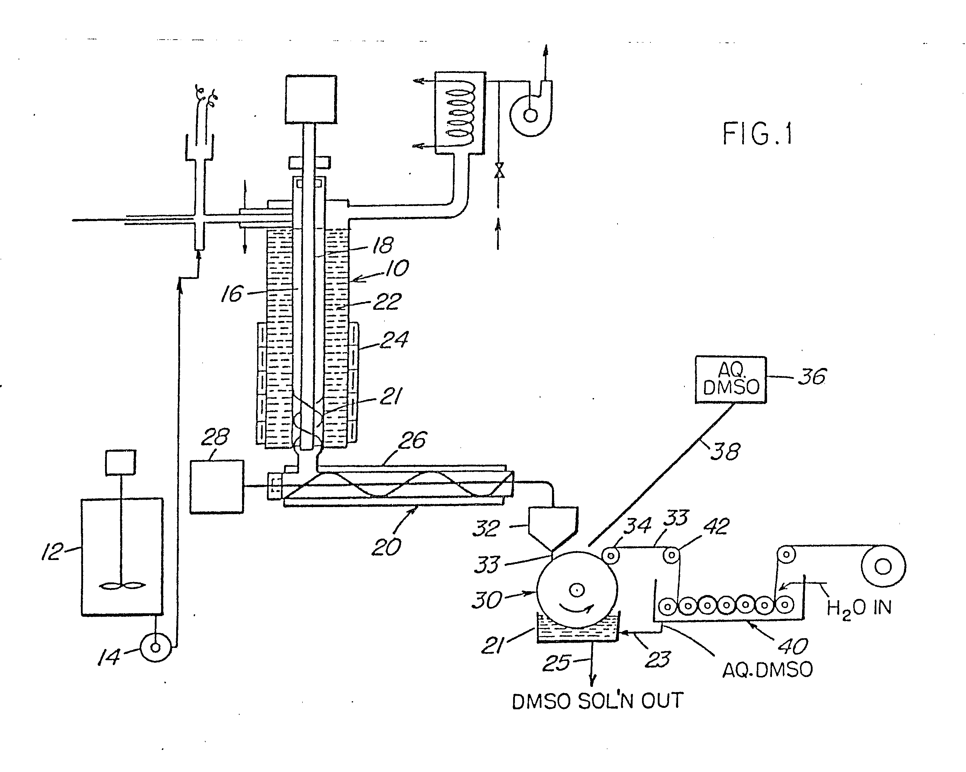

The accompanying drawing sets forth a schematic illustration of an apparatus that can be adapted to practice the process of this invention.

This invention is applicable to color stabilization of biaxially oriented polyacrylonitrile (PAN) films produced as described in U.S. Patent No. 4,066,731.

A contemplated use of such films is as a base for printed electronic circuits, which must withstand temperatures of 130°C. in continuous use. Without heat stabilization, PAN films will discolor, yellow to amber to black, and eventually degrade in physical properties. When used in packaging, there can be discoloration at the heat seals.

In the following discussion, reference will be to films made from the homopolymer of acrylonitrile. It is to be understood, however, that this invention contemplates, in addition, the preparation of films that are made from copolymers of acrylonitrile with other ethylenically unsaturated monomers that are copolymerizable therewith, wherein said copolymers predominate in units derived from the acrylonitrile monomer.

Suitable ethylenically unsaturated monomers copolymerizable with acrylonitrile include, for example, alkyl acrylates such as methyl acrylate, butyl acrylate, and the like. Generally, it is preferred to use polyacrylonitrile homopolyer. Where a copolymer is employed, it is preferred that the units in said copolymer derived from the acrylonitrile monomer be present in an amount of at least about 80 percent by weight, and more preferably in an amount of at least 95 percent by weight.

The polyacrylonitrile (or acrylonitrile copolymer, as the case may be) may be prepared in any conventional manner, as by emulsion polymerization, suspension polymerization, or solution polymerization. However, inasmuch as the method of this invention utilizes a solution of polyacrylonitrile in a solvent that is water soluble as the precursor of the polymer film, it clearly is most efficient to effect the polymerization in solution wherein the solvent is dimethyl sulfoxide.

As noted, the preferred solvent employed for the solution polymerization is dimethyl sulfoxide. Alternatively, the solvent may be succinonitrile or a mixture of dimethyl sulfoxide and dimethyl sulfone wherein at least 50 percent by weight of said mixture is dimethyl sulfoxide.

Referring to the drawing, there is shown an overall apparatus, which includes a polymerization reactor generally designated by the reference numeral 10, and extruder 20, a casting drum 30, and a washer 40.

Considering first the polymerization phase, suitable monomer (acrylonitrile), solvent (dimethyl sulfoxide), and polymerization initiator are admixed in monomer feed tank 12. They are then pumped by pump 14 to tubular reactor 10 and into the top of the annular reaction zone 16. The reactor 10 is equipped with an agitator 18, equipped with a pair of screw flight scraper blades 21.

4

Tubular reactor 10 is surrounded with a water jacket 22 wherein the water can be heated to boiling, as by heaters 24 and the pressure in the jacket 22 is controlled by means of a vacuum pump.

Extruder 20 withdraws polymer from the bottom of the reactor 10, and as it does so, the reactor is maintained charged with monomer feed by a level controller (not shown).

Screw extruder 20 is jacketed with heaters 26, and is driven by a variable speed drive 28. Accordingly, as polymer disssolved in dimethyl sulfoxide enters the extruder from the reactor, it is passed through the extruder, into slot extrusion die 32, and is extruded therefrom in the form of a thin polymeric film. This film extrudate is cast upon drum 30, which drum rotates in a counter clockwise direction, thereby passing the cast film 33 between the drum and nip roll 34.

In accordance with an important aspect of the invention, the casting drum 30 is continuously wetted with an aqueous solution of dimethyl sulfoxide, or alternatively, the drum is provided with a coating of polytetrafluoroethylene. If the aqueous dimethyl sulfoxide is used, as schematically shown in the drawing, tank 36 contains aqueous dimethyl sulfoxide solution, which solution passes from the tank through line 38 and directly to the casting drum 30.

A container 21 is disposed beneath casting drum 30. In this container is aqueous dimethyl sulfoxide, which may be continuously introduced via conduit 23. As the drum rotates, the aqueous dimethyl sulfoxide in container 21 helps to coagulate the film on the drum and also serves as a first washing for the film, thereby enhancing the film's strength

and rendering it more readily strippable from the drum. Conduit 25 permits the continuous withdrawal of aqueous dimethyl sulfoxide from container 21.

The film 33 then passes to the washer 40 via guide roll 42. Washer 40 contains therein a multiplicity of pairs of steel-rubber nip rolls for the purpose of conveying the polymer film through the washer while at the same time restraining the film from both longitudinal and lateral shrinkage.

The washer contains four steel rolls and three rubber rolls disposed between the steel rolls and in contact with them. The four steel rolls are geared together and positively driven so as to each turn at the same speed, thereby preventing substantial longitudinal shrinkage of the polymer film. The three rubber rolls are idler rolls. By virtue of the tight frictional engagement between adjacent rolls, any tendency toward lateral shrinkage of the polymer film is effectively reduced.

Fresh water is introduced into washer 40 via a conduit shown on the right hand side. The polymer film 33, rich in dimethyl sulfoxide, is shown entering washer 40 at the left hand side. Accordingly, a countercurrent washing is effected, with the water, as it progresses from right to left becoming ever richer in dimethyl sulfoxide and correspondingly, with the polymer film rich in dimethyl sulfoxide as it enters from the left, gradually losing the dimethyl sulfoxide and having it replaced with water as the film progresses from left to right. The countercurrent wash solution, rich in dimethyl sulfoxide, is removed from the wash apparatus 40 by means of conduit 23.

As previously pointed out, after the polymer has been water washed there results a product that is composed essentially of polyacrylonitrile and water, with the water typically being present in an amount of from about 25 to 50 percent by weight. It is strong, stiff, tough, transparent, and essentially water-white.

The foregoing film is subsequently treated so as to remove the water and obtain a final film consisting essentially of polyacrylonitrile. To that end, the film is first subjected to biaxial stretching, typically two and a half fold in both the longitudinal and lateral direction. The biaxial stretching may be carried out in either hot water at, e.g., 50° to 80°C., or in a moist atmosphere, typically steam/air mixtures. After the biaxial stretching, the film should be dried under restrained conditions, as by drying in hot air at 100° to 200°C. Drying is preferably followed by heat setting for a few seconds at, e.g., 200°C.

Apart from an end use as a shrinkable film, it is preferred to carry out drying of the oriented film while either preventing it from shrinking or else permitting it to shrink only a controlled amount.

The particular drying technique is not critical. Thus, the following different modes of drying have all proven satisfactory: 30 seconds in high velocity impinging air at 177°C; 15 seconds exposure three inches away from a battery of 1000 watt quartz tube radiant heaters spaced one inch apart; or two minutes in a Fisher Convection oven at 177-204°C. (very low air velocity).

The additives utilizable to heat stabilize biaxially oriented polyacrylonitrile film, in accordance with this

7

invention are maleic acid, sodium hydrosulfite, sodium bisulfite, and a combination of ferric chloride and phosphoric acid. The additive is introduced into the process prior to biaxial orientation, as an aqueous solution containing between about one weight percent and about 20 weight percent additive. The additive can be introduced into the water-containing polyacrylonitrile film most feasibly by passing such film emerging from the washer 40 through a soaking tank (not shown). The soaking tank contains an aqueous solution of the selected additive at the desired concentration. The dwell time in the soaking tank can be regulated by a series of rolls, similar to the arrangement in the washer 40.

The effectiveness of an additive was determined using samples of the water-containing polyacrylonitrile film prior to stretching and drying, i.e., film that had passed through the washer 40. The film sample was immersed in an aqueous solution of the candidate additive. Then, the film was stretched and dried in a T.M. Long Stretcher. The resultant biaxially oriented PAN film was tested for heat stability in an accelerated test, that involved heating the film for 10 minutes in a forced air oven at 200°C. Film without an additive showed severe darkening due to color formation.

## Example 1

A sample of water-containing polyacrylonitrile
film was immersed for 2 hours in a 20 weight
percent aqueous solution of maleic acid. The
film was then biaxially oriented and dried.
In the oven test, the film was clear and showed
a slightyellowing.

8

## Example 2

A sample of water-containing polyacrylonitrile film was immersed for 2 hours in a 20 weight percent aqueous solution of sodium hydrosulfite. The film was then biaxially oriented and dried. In the oven test, the film showed a milky appearance.

## Example 3

A sample of water-containing polyacrylonitrile film was immersed for 2 hours in a 20 weight percent aqueous solution of sodium bisulfite. The film was then biaxially oriented and dried. In the oven test, the film showed a milky appearance.

## Example 4

A sample of water-containing polyacrylonitrile film was immersed for 10 minutes in a 5.8 weight percent aqueous solution of ferric chloride, then for 8 minutes in a 3.0 weight percent aqueous solution of phosphoric, followed 3 minutes in water. The film was then biaxially oriented and dried. In the oven test, the film was clear and water white.

WHAT IS CLAIMED IS:

1.   A method for making a biaxially oriented film comprising casting a film of a hot concentrated solution of polyacrylonitrile in dimethyl sulfoxide to provide a film comprising polyacrylonitrile and solvent, contacting the resulting film with water while maintaining the film under conditions that substantially prevent it from curling and puckering to substantially remove the dimethyl sulfoxide from the film and incorporate about 40-60% by weight water into said film, and recovering therefrom a film consisting essentially of polyacrylonitrile and from about 40% to about 60% by weight water, biaxially orienting said film and drying said biaxially oriented film to substantially remove water therefrom; characterized in that: prior to biaxially orienting, the water washed film is contacted with a solution comprising a minor amount of an additive selected from maleic acid, sodium hydrosulfite, sodium bisulfite, or a combination of ferric chloride and phosphoric acid.

2.   The method of Claim 1, wherein said additive is sodium hydrosulfite.

3.   The method of Claim 1, wherein said additive is sodium bisulfite.

4.   The method of Claim 1, wherein said additive is a combination of ferric chloride and phosphoric acid.

5.   Biaxially oriented polyacrylonitrile film produced by the method claimed in any of Claims 1 to 4.

FIG.1

| Category | Citation of document with indication, where appropriate, of relevant passages | Relevant to claim |
|---|---|---|
| | US - A - 2 661 347 (MONSANTO CHEMICAL CO.) <br> * column 1, lines 32 to 35; column 2, line 41 to column 3, line 13 * <br> -- | 1 |
| A | US - A - 3 784 511 (MONSANTO CO.) <br><br> * column 2, lines 52 to 59 * <br> -- | |
| A | DE - A1 - 2 614 440 (STANDARD OIL CO.) <br> * page 1, last line but one to page 2, line 10 * <br> -- | |
| A | DE - B2 - 1 504 938 (STANDARD OIL CO.) <br> * column 4, lines 42 to 50; column 5, lines 30 to 62 * <br> -- | |
| D | US - A - 4 066 731 (MOBIL OIL CORP.) <br> * complete document * | / |
| P | & FR - A1 - 2 405 275 | |
| | & DE - A1 - 2 744 491 <br> ---- | |

## DOCUMENTS CONSIDERED TO BE RELEVANT

**CLASSIFICATION OF THE APPLICATION (Int Cl.)**

C 08 L 33/20
C 08 J 5/18

**TECHNICAL FIELDS SEARCHED (Int.Cl.)**

B 29 D 7/00
C 08 J 5/18
C 08 J 7/14
C 08 L 33/20

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X | The present search report has been drawn up for all claims

| Place of search | Date of completion of the search | Examiner |
|---|---|---|
| Berlin | 08-08-1980 | BRUCK |

EPO Form 1503.1 06.78